# FASCICULE DE BREVET EUROPEEN

(11) **EP 1 721 486 B1**
(45) Date de publication et mention de la délivrance du brevet: **14.09.2011**
(21) Numéro de dépôt: 05717609.1
(22) Date de dépôt: 10.02.2005
(51) Int. Cl.: H04W 56/00

(54) **Signal de radiotelephonie cellulaire permettant une synchronisation d'un canal supplementaire a l'aide d'un canal principal, ainsi que procédé, terminal et station de base correspondants**
Zellulares Funktelefonsignal, das Synchronisation eines Ergänzungskanals mittels eines Hauptkanals ermöglicht, und entsprechendes Verfahren, Endgerät und Basisstation
Cellular radiotelephone signal permitting synchronisation of a supplementary channel by means of a principal channel and corresponding method, terminal and base station

(30) Priorité: 16.02.2004 FR 0401545
(43) Date de publication de la demande: 15.11.2006
(73) Titulaire: Sierra Wireless, 92442 Issy-les-Moulineaux Cedex (FR)
(72) Inventeur: IBRAHIM, Nicolas, F-78180 Montigny le Bretonneux (FR); VUJCIC, Dragan, F-91400 Orsay (FR)
(74) Mandataire: Guéné, Patrick
(86) Numéro de dépôt international: PCT/FR2005/000319
(87) Numéro de publication internationale: WO 2005/084062

(56) Documents cités:
- WO-A-00/77961
- WO-A-99/53644
- US-A- 6 084 871
- US-A- 6 115 354
- US-A1- 2003 081 538
- "3rd Generation Partnership Project; Technical Specification Group Radio Access Network; High Speed Downlink Packet Access; Physical Layer Aspects (Release 5)" décembre 2001 (2001-12), 3GPP TR 25.858 V1.0.0, XX, XX, PAGE(S) 1,3-23 , XP002192345 page 12, alinéa 8.1.2 - page 17, alinéa 8.1.4

## Description

### 1. Domaine de l'invention

Le domaine de l'invention est celui de la radiotéléphonie cellulaire. Plus précisément, l'invention concerne la transmission des données, en particulier à des débits élevés, dans un système de radiotéléphonie.

Les systèmes de radiotéléphonie connus, tels que le G.S.M, sont essentiellement dédiés aux communications vocales. Ils mettent en oeuvre un canal comprenant deux voies symétriques : une voie descendante (d'une station de base terrestre vers une station mobile) et une voie montante (de la station mobile vers la station de base).

Les systèmes en cours de développement reposent également sur une telle structure. Ainsi, le standard UMTS défini par l'ETSI prévoit une répartition symétrique entre la voie descendante et la voie montante.

Il a également été proposé de compléter le système de radiotéléphonie en ajoutant au canal principal au moins un canal supplémentaire, uniquement descendant et dédié à la transmission de données à haut débit, telles que des fichiers transmis sur le réseau Internet.

Dans le cadre de la présente invention, on suppose que le système de radiotéléphonie est du type comprenant un canal principal bidirectionnel symétrique et au moins un canal supplémentaire tel que précité.

On suppose également que le canal supplémentaire met en oeuvre une technique multiporteuse assurant une répartition des données dans l'espace temps/fréquence, et présente une structure en sous-trames.

Plus précisément, l'invention concerne une technique permettant, dans un terminal d'un système de radiotéléphonie tel que précité, une synchronisation au niveau sous-trame du canal supplémentaire.

L'invention s'applique notamment, mais non exclusivement, à la synchronisation au niveau sous-trame d'un lien supplémentaire OFDM HS-DPA (canal supplémentaire) associé à un lien principal UMTS (canal principal bidirectionnel symétrique).

### 2. Solutions de l'art antérieur

Dans un souci de simplification, on présente ci-après les inconvénient de l'art antérieur en relation avec cette application particulière précitée. Il est clair cependant que cette discussion peut être transposée à d'autres systèmes de radiotéléphonie comprenant un canal principal bidirectionnel symétrique et au moins un canal supplémentaire.

On rappelle que le lien supplémentaire HS-DPA (pour « High-Speed Downlink Packet Access ») est un lien descendant haut débit associé au lien principal UMTS. Il vise à augmenter le débit descendant afin d'offrir des services nécessitant du haut débit (multimédia, vidéo streaming, etc.).

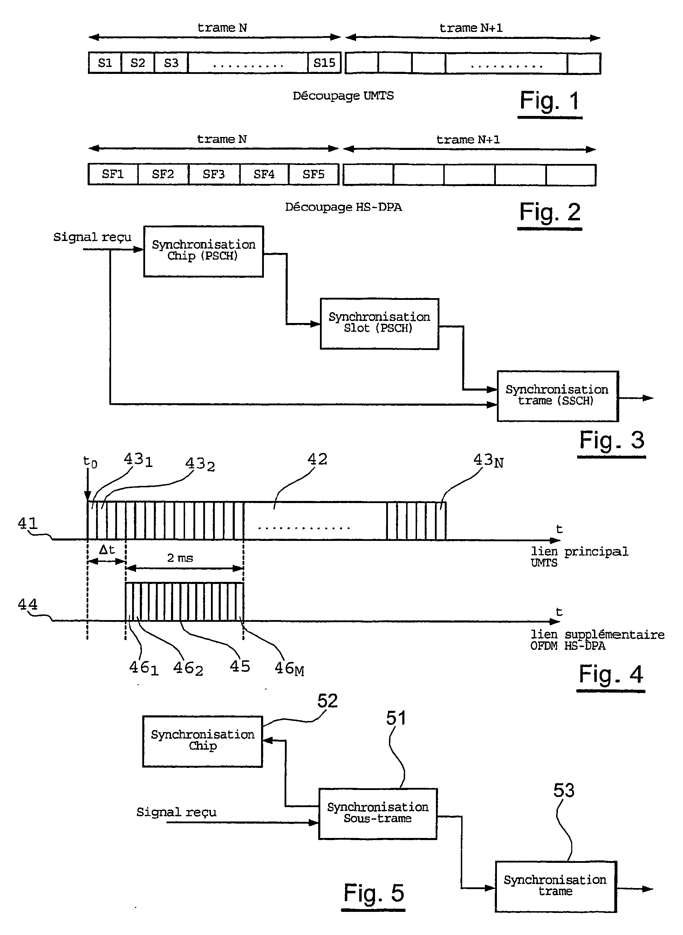

Comme illustré sur la figure 1, le lien principal UMTS présente une structure organisée en trames N, N+1 comprenant chacune 15 slots (intervalles de temps) S1 à S 15. Comme illustré sur la figure 2, le lien supplémentaire HS-DPA présente une structure organisée en trames N, N+1 comprenant chacune jusqu'à 5 sous-trames SF1 à SF5. Par ailleurs, chaque slot ou sous-trame comprend un ensemble de symboles, et chaque symbole comprend un ensemble d'unités de signal (chips).

Deux solutions techniques sont proposées pour la couche physique du lien supplémentaire HS-DPA :
- un système à étalement de spectre conforme au système UMTS ;
- un système basé sur une modulation multi-porteuse OFDM.

Avec la première solution, on obtient un lien supplémentaire UMTS HS-DPA qui est inhérent au système UMTS. Il peut donc bénéficier de toutes les techniques déjà utilisées par le lien principal UMTS, telles que l'estimation du canal, le contrôle de puissance et des horloges, et notamment la synchronisation qui se fait avec le signal CPICH spécifié dans la norme UMTS.

Avec la deuxième solution, on obtient un lien supplémentaire OFDM HS-DPA, qui utilise une modulation différente de celle utilisée dans le système UMTS (étalement de spectre, CDMA). De ce fait, il ne peut pas utiliser toutes les techniques utilisées dans le système UMTS. Il doit donc utiliser des techniques spécifiques afin d'accomplir les mêmes fonctionnalités. Néanmoins, une certaine adaptation au contexte peut faciliter l'établissement et le maintien de la communication du lien OFDM.

Une sous-trame OFDM du lien supplémentaire OFDM HS-DPA et une sous-trame UMTS du lien supplémentaire UMTS HS-DPA UMTS possèdent une même durée (à savoir 2 ms) et sont interchangeables. Les liens supplémentaires OFDM HS-DPA et UMTS HS-DPA peuvent utiliser chacun une horloge (ou une base de temps) distincte, mais leurs architectures sont telles que le début et la fin des sous-trames OFDM et UMTS sont identiques.

La synchronisation en temps est un des éléments clés de l'établissement d'une communication. Cette synchronisation est découpée en plusieurs « couches », du fait de la nature du système de communication cellulaire radio-mobile qui définit les deux entités : sous-trame et trame (voir figure 2). Ainsi, pour le lien supplémentaire HS-DPA, cette synchronisation se divise en plusieurs étapes :
- synchronisation au niveau chip, qui consiste à trouver la position des symboles (et donc des chips compris dans ces symboles) selon l'horloge utilisée ;
- synchronisation au niveau sous-trame, qui consiste à trouver le début des sous-trames ;
- synchronisation au niveau trame, qui consiste à trouver le début de chaque trame.

La synchronisation du lien supplémentaire UMTS HS-DPA peut être réalisée relativement aisément. Un tel procédé est divulgué dans dans la demande de brevet internationale WO99/53644. En effet, comme indiqué ci-dessus, du fait que le lien supplémentaire UMTS HS-DPA est intimement lié au système UMTS, sa synchronisation peut directement s'appuyer sur celle du lien principal UMTS. Ainsi, la synchronisation initiale au niveau chip du lien supplémentaire UMTS HS-DPA peut se faire par une auto-corrélation temporelle sur un signal de synchronisation spécifique (PSCH) prévu dans l'UMTS. Ayant acquis cette synchronisation au niveau chip, la synchronisation au niveau sous-trame du lien supplémentaire UMTS HS-DPA peut se faire par une recherche du début des slots UMTS (sachant que chaque sous-trame contient un nombre prédéterminé de slots UMTS, par exemple 3). Cette recherche est faite à l'aide du signal PSCH. Ce signal est en forme de paquet de 256 chips identiques émis au début de chaque slot. Enfin, la synchronisation trame du lien supplémentaire UMTS HS-DPA est effectuée en utilisant le signal SSCH (Secondary Synchronisation Channel) qui a la même forme que le signal PSCH à l'exception du fait que les paquets de 256 chip transmis sont modulés par des information connues. La **figure 3** illustre l'ordre des différentes étapes de synchronisation du lien supplémentaire UMTS HS-DPA, au niveaux chip, slot et trame respectivement.

En revanche, la synchronisation du lien supplémentaire OFDM HS-DPA est aujourd'hui plus difficile à réaliser car ce dernier, contrairement au lien supplémentaire UMTS HS-DPA, n'est pas intimement lié au système UMTS. Selon la technique actuelle, la synchronisation au niveau chip du lien supplémentaire OFDM HS-DPA peut être obtenue en utilisant l'intervalle de garde qui représente une partie du symbole OFDM (la dernière partie). Cette synchronisation au niveau chip s'obtient par une simple auto-corrélation classique sur le signal OFDM HS-DPA reçu. Mais, une fois cette synchronisation au niveau chip obtenue, il est impossible de connaître le début des sous-trames et des trames car le signal OFDM spécifié dans le cadre HS-DPA ne contient pas les signaux PSCH et SSCH nécessaires aux synchronisations aux niveaux sous-trame et trame. Selon la technique actuelle voir par example la demande de brevet français FR 2 868 656 la synchronisation au niveau sous-trame du lien supplémentaire OFDM HS-DPA est propre au système OFDM et repose sur l'insertion de signaux spécifiques à la synchronisation au niveau sous-trame. L'inconvénient majeur de la technique actuelle est que les signaux spécifiques précités augmentent la charge du lien supplémentaire OFDM HS-DPA.

### 3. Objectifs de l'invention

L'invention a notamment pour objectif de pallier cet inconvénient majeur de l'état de la technique.

Plus précisément, l'un des objectifs de la présente invention est de fournir une nouvelle technique permettant de faciliter la synchronisation au niveau sous-trame du canal supplémentaire d'un système de radiotéléphonie cellulaire (notamment un lien supplémentaire OFDM HS-DPA associé à un lien principal UMTS).

L'invention a également pour objectif de fournir une telle technique qui ne nécessite pas, ou limite, l'ajout de signaux spécifiques à la synchronisation au niveau sous-trame, et permette de conserver la structure initialement définie pour le canal supplémentaire.

Un autre objectif de l'invention est de fournir une telle technique qui soit simple à mettre en oeuvre et peu coûteuse.

Un objectif complémentaire de l'invention est de fournir une telle technique qui ne nécessite pas de réaliser au préalable une synchronisation au niveau chip du canal supplémentaire.

Encore un autre objectif de l'invention est de fournir une telle technique qui rende aisée la synchronisation au niveau trame du canal supplémentaire.

### 4. Caractéristiques essentielles de l'invention

Ces différents objectifs, ainsi que d'autres qui apparaîtront par la suite, sont atteints selon l'invention à l'aide d'un signal de radiotéléphonie cellulaire, du type comprenant :
- un canal principal bidirectionnel symétrique, comprenant une voie montante principale et une voie descendante principale, assurant notamment la transmission à bas ou moyen débit de données et d'information de signalisation et de contrôle;
- au moins un canal supplémentaire affecté au sens descendant uniquement, assurant notamment la transmission de données à haut débit, mettant en oeuvre une technique multiporteuse assurant une répartition des données dans l'espace temps/fréquence, et présentant une structure en sous-trames.

Selon l'invention, le début d'au moins une sous-trame du canal supplémentaire est décalé d'un intervalle de temps de durée déterminée non nulle (Δt) par rapport à un instant (t₀) déterminé sur le canal principal, de façon à permettre, dans un terminal, une synchronisation au niveau sous-trame du canal supplémentaire, par détection dudit instant déterminé (t₀) et ajout dudit intervalle de temps (Δt).

Le principe général de l'invention consiste donc à aligner temporellement les sous-trames du canal supplémentaire par rapport à des instants de référence (t₀) connus et identifiés sur le canal principal et pouvant donc être déterminés par un terminal (récepteur).

L'intervalle de temps (Δt) et l'instant (t₀) déterminé sur le canal principal sont soit connus à l'avance par le terminal (récepteur), soit communiqués à ce dernier dynamiquement via le canal principal (voir les différents modes de réalisation de l'invention discutés en détail ci-après).

Dans un premier mode de réalisation avantageux de l'invention, le canal principal présente une structure organisée en trames et l'instant (t₀) déterminé sur le canal principal est un début d'une trame du canal principal.

Avantageusement, le début de chaque trame du canal principal constitue un instant (t₀) déterminé.

Selon une variante avantageuse, le début de seulement certaine(s) trame(s) du canal principal, dites trames de synchronisation, constitue un instant (t₀) déterminé.

Dans cette variante, le terminal doit pouvoir identifier chaque trame de synchronisation parmi l'ensemble des trames qu'il reçoit sur le canal principal.

Pour cela, avantageusement, le canal principal et/ou le canal supplémentaire assure(nt) la transmission d'informations d'identification d'au moins une trame de synchronisation.

Ceci permet notamment de ne pas figer à l'avance un choix de trames de synchronisation. Il est clair cependant que l'invention concerne également le cas où le choix des trames de synchronisation est figé à l'avance, et où le terminal en est informé une fois pour toutes.

Dans un second mode de réalisation avantageux de l'invention, on suppose que le canal principal présente une structure organisée en trames comprenant chacune une pluralité de slots, alors l'instant (t₀) déterminé sur le canal principal est un début d'un slot du canal principal.

Avantageusement, le début de seulement certain(s) slot(s) du canal principal, dits slots de synchronisation, constitue un instant (t₀) déterminé.

Le terminal doit ici pouvoir identifier chaque slot de synchronisation parmi l'ensemble des slots qu'il reçoit sur le canal principal.

Pour cela, avantageusement, le canal principal et/ou le canal supplémentaire assure(nt) la transmission d'informations d'identification d'au moins un slot de synchronisation.

De cette façon, on peut notamment ne pas figer à l'avance un choix de slots de synchronisation. Il est clair cependant que l'invention concerne également le cas où le choix des slots de synchronisation est figé à l'avance, et où le terminal en est informé une fois pour toutes.

Si on se place dans le cas où le canal principal présente une structure organisée en trames comprenant chacune une pluralité de slots, chaque slot comprenant une pluralité d'unités de signal (chips), alors la durée déterminée dudit intervalle de temps (Δt) est préférentiellement égale à k fois la durée d'une unité de signal, avec k un nombre entier. Avantageusement, ce nombre k est égal à 256.

Avantageusement, le canal principal et/ou le canal supplémentaire assure(nt) la transmission d'informations relatives à ladite durée de l'intervalle de temps (Δt).

Ceci permet notamment de ne pas figer à l'avance la durée de l'intervalle de temps (Δt). Il est clair cependant que l'invention concerne également le cas où cette durée est figée à l'avance, et où le terminal en est informé une fois pour toutes.

De façon préférentielle, le canal principal et/ou le canal supplémentaire assure(nt) la transmission d'informations relatives au rang, au sein d'une trame de la structure du canal supplémentaire, d'une sous-trame dont le début peut être détecté, de façon à permettre une synchronisation au niveau trame du canal supplémentaire en détectant le début de la trame suivante, en fonction de ladite synchronisation au niveau sous-trame et desdites informations relatives au rang de ladite sous-trame.

Avantageusement, le canal principal et/ou le canal supplémentaire assure(nt) en outre la transmission d'informations relatives au mode de transmission des sous-trames sur le canal supplémentaire, ladite synchronisation au niveau trame du canal supplémentaire étant fonction en outre desdites informations relatives au mode de transmission.

Dans un mode de réalisation avantageux de l'invention, le canal principal met en oeuvre une technique d'accès à étalement de spectre (CDMA), et est préférentiellement un lien UMTS. Par ailleurs, ledit canal supplémentaire met par exemple en oeuvre une technique multiporteuse basée sur une modulation OFDM ou une modulation IOTA.

Le principe et la mise en oeuvre de la modulation IOTA sont décrits dans la demande de brevet français FR-95 05455.

Avantageusement, le canal principal assure au préalable la transmission d'une notification invitant ledit terminal à effectuer ladite synchronisation au niveau sous-trame du canal supplémentaire, en vue d'un basculement du terminal du canal principal vers le canal supplémentaire.

Il est à noter que cette procédure de notification (qui utilise préférentiellement le canal de paging du canal principal), peut être utilisée pour lancer tout type de procédure de synchronisation au niveau sous-trame du canal supplémentaire, et donc également la procédure classique précitée (c'est-à-dire basée sur des signaux spécifiques de synchronisation transmis sur le canal supplémentaire, et non pas sur les notions d'intervalle de temps (Δt) et d'instant (t₀) comme dans la présente invention).

Dans le cadre de la présente invention, cette notification invite donc le terminal à détecter l'instant (t₀) déterminé sur le canal principal.

De façon avantageuse, ladite notification comprend des informations relatives à ladite durée de l'intervalle de temps (Δt) et/ou audit instant (t₀) déterminé sur le canal principal.

Préférentiellement, ladite notification est transmise sur un canal de paging compris dans ledit canal principal.

L'invention concerne également un procédé de synchronisation d'un canal supplémentaire associé à un canal principal bidirectionnel symétrique, ce procédé utilisant le signal de radiotéléphonie cellulaire précité. Ce procédé comprend une étape de synchronisation du canal supplémentaire au niveau sous-trame, comprenant elle-même les étapes suivantes :
- détection d'un instant (t₀) déterminé sur le canal principal ;
- obtention du début d'une sous-trame du canal supplémentaire, en décalant l'instant (t₀) détecté d'un intervalle de temps de durée déterminée non nulle (Δt).

Avantageusement, ladite durée de l'intervalle de temps (Δt) et/ou ledit instant (t₀) déterminé sur le canal principal est-(sont) figé(s) et connus dudit terminal.

Selon une variante avantageuse, ladite durée de l'intervalle de temps (Δt) et/ou ledit instant (t₀) déterminé sur le canal principal est (sont) variable(s), et en ce que le canal principal et/ou le canal supplémentaire assure(nt) la transmission d'informations relatives à ladite durée de l'intervalle de temps (Δt) et/ou audit instant (t₀).

De façon avantageuse, ledit procédé comprend en outre une étape préalable de transmission par le canal principal d'une notification invitant ledit terminal à effectuer ladite synchronisation au niveau sous-trame du canal supplémentaire, en vue d'un basculement du terminal du canal principal vers le canal supplémentaire.

L'invention concerne aussi un terminal mettant en oeuvre un tel signal de radiotéléphonie cellulaire. Ce terminal comprend des moyens de synchronisation du canal supplémentaire au niveau sous-trame, comprenant eux-mêmes :
- des moyens de détection d'un instant (t₀) déterminé sur le canal principal ;
- des moyens d'obtention du début d'une sous-trame du canal supplémentaire, en décalant l'instant (t₀) détecté d'un intervalle de temps de durée déterminée non nulle (Δt).

L'invention concerne encore une station de base mettant en oeuvre un tel signal de radiotéléphonie cellulaire. Cette station de base comprend des moyens de décalage du début d'au moins une sous-trame du canal supplémentaire, d'un intervalle de temps de durée déterminée non nulle (Δt) par rapport à un instant (t₀) déterminé sur le canal principal, de façon à permettre, dans un terminal, une synchronisation au niveau sous-trame du canal supplémentaire, par détection dudit instant déterminé (t₀) et ajout dudit intervalle de temps (Δt).

### 5. Liste des figures

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 illustre la structure connue d'un lien principal UMTS, organisée en trames et slots ;
- la figure 2 illustre la structure connue d'un lien supplémentaire HS-DPA (OFDM ou UMTS), organisée en trames et sous-trames ;
- la figure 3 illustre, dans le cadre de la technique connue, les relations entre les trois synchronisations du lien supplémentaire UMTS HS-DPA, aux niveaux chip, slot et trame respectivement ;
- la figure 4 illustre un signal de radiotéléphonie cellulaire selon un mode de réalisation particulier de l'invention, dans lequel l'instant de référence (t₀) est le début d'une trame du lien principal UMTS ;
- la figure 5 illustre, dans le cadre de la technique selon l'invention, les relations entre les trois synchronisations du lien supplémentaire OFDM-HS-DPA, aux niveaux chip, sous-trame et trame respectivement.

### 6. Description d'un mode de réalisation de l'invention

Dans la suite de la description, on considère, à titre d'exemple, le cas d'un signal de radiotéléphonie cellulaire comprenant un lien principal UMTS (canal principal bidirectionnel symétrique) et un lien supplémentaire OFDM HS-DPA (canal supplémentaire).

L'invention définit des caractéristiques de ce signal, permettant de faciliter la synchronisation au niveau sous-trame, ainsi qu'aux niveaux chip et trame, du lien supplémentaire OFDM HS-DPA.

La **figure 4** illustre un signal de radiotéléphonie cellulaire selon un mode de réalisation particulier de l'invention.

Sur un premier axe temporel 41, on a représenté le lien principal UMTS. Dans un souci de simplification, une seule trame 42 de ce lien est représentée. De façon classique (voir ci-dessus la discussion de la figure 1), cette trame 42 comprend une pluralité de slots (non représentés) comprenant eux-mêmes une pluralités de chips (unités de signal) 43, à 43_{N}.

Sur un second axe temporel 44, on a représenté le lien supplémentaire OFDM HS-DPA. Dans un souci de simplification, une seule sous-trame 45 de ce lien est représentée. Elle présente par exemple une durée de 2 ms. De façon classique (voir ci-dessus la discussion de la figure 2), cette sous-trame 45 comprend une pluralités de chips (unités de signal) 46ₗ à 46_{M}.

Dans ce mode de réalisation de l'invention, la trame 42 du lien principal UMTS joue le rôle d'une « trame de synchronisation » au niveau sous-trame du lien supplémentaire OFDM HS-DPA. Ceci se traduit par le fait que le début de la sous-trame 45 du lien supplémentaire OFDM HS-DPA est décalé d'un intervalle de temps Δt, de durée déterminée non nulle, par rapport à l'instant t₀ de début de la trame 42 du lien principal UMTS.

Ainsi, un terminal qui reçoit ce signal de radiotéléphonie cellulaire peut facilement effectuer une synchronisation au niveau sous-trame du lien supplémentaire OFDM HS-DPA compris dans ce signal.

En effet, il suffit que le terminal détecte l'instant t₀ de début de la trame 42 du lien principal UMTS qu'il reçoit, puis décale cet instant t₀ de la durée de l'intervalle de temps Δt (que par hypothèse il connaît), obtenant ainsi l'instant de début de la sous-trame 45 du lien supplémentaire OFDM HS-DPA qu'il reçoit également.

La durée de l'intervalle de temps (Δt) peut être figée et connue du terminal. Par exemple, cette durée est égale à 256 chips, ce qui correspond à un temps symbole pilote.

Selon une variante, elle peut être variable et le lien principal UMTS assure la transmission d'informations relatives à cette durée, permettant ainsi au terminal d'en prendre connaissance. On peut aussi envisager que cette transmission d'informations soit effectuée par le lien supplémentaire OFDM HS-DPA, seul ou en combinaison avec le lien principal UMTS.

De même, le choix des trames du lien principal UMTS qui jouent le rôle de trames de synchronisation (au sens précité) peut être figé et connu du terminal. Par exemple, toutes les trames du lien principal UMTS sont des trames de synchronisation.

Selon une variante, le lien principal UMTS assure la transmission d'informations d'identification des trames de synchronisation. Par exemple, une trame du lien principal UMTS peut transmettre une information indiquant que la trame suivante du lien principal UMTS est une trame de synchronisation. On peut aussi envisager que cette transmission d'informations soit effectuée par le lien supplémentaire OFDM HS-DPA, seul ou en combinaison avec le lien principal UMTS.

La **figure 5** illustre, dans le cadre de la technique selon l'invention, les relations entre les trois synchronisations du lien supplémentaire OFDM HS-DPA, aux niveaux chip, sous-trame et trame respectivement.

Comme expliqué ci-dessus en relation avec la figure 4, le signal de radiotéléphonie cellulaire selon l'invention permet de réaliser de façon simple la synchronisation au niveau sous-trame du lien supplémentaire OFDM HS-DPA, référencée 51 sur la figure 5.

Il convient de noter que dès lors que cette synchronisation au niveau sous-trame 51 est obtenue, la synchronisation au niveau chip (référencée 52 sur la figure 5) l'est également. En d'autres termes, il n'est pas nécessaire de réaliser au préalable une synchronisation au niveau chip du lien supplémentaire OFDM HS-DPA. En effet, l'obtention grâce à l'invention d'une information sur le début d'une sous-trame du lien supplémentaire OFDM HS-DPA constitue également une information sur le point d'échantillonnage du premier chip compris dans le premier symbole de cette sous-trame.

Optionnellement, le signal de radiotéléphonie cellulaire selon l'invention permet également de réaliser de façon simple la synchronisation au niveau trame du lien supplémentaire OFDM HS-DPA, référencée 53 sur la figure 5, après que la synchronisation au niveau sous-trame 51 a été réalisée.

Ceci suppose par exemple que le terminal connaisse :
- le rang, au sein d'une trame du supplémentaire OFDM HS-DPA, de la sous-trame 45 dont le début est détecté lors de l'étape 51 de synchronisation au niveau sous-trame du lien supplémentaire OFDM HS-DPA ;
- le mode de transmission des sous-trames sur le lien supplémentaire OFDM HS-DPA. Il peut en effet exister plusieurs modes : transmission de toutes les sous-trames, d'une trame sur trois, etc.

En effet, à partir du rang précité, du mode de transmission précité et de la synchronisation au niveau sous-trame, le terminal peut détecter le début de la trame suivante du lien supplémentaire OFDM HS-DPA.

La connaissance du rang et du mode de transmission précités par le terminal est par exemple obtenue par la transmission par le lien principal UMTS d'informations relatives à ce rang et à ce mode de transmission. On peut aussi envisager que cette transmission d'informations soit effectuée par le lien supplémentaire OFDM HS-DPA, seul ou en combinaison avec le lien principal UMTS.

Il est clair que de nombreux autres modes de réalisation de l'invention peuvent être envisagés.

On peut notamment prévoir que les instants de référence t₀ soient les débuts de tous ou seulement certains des slots du lien principal UMTS.

On peut également prévoir que le lien principal UMTS assure au préalable la transmission d'une notification invitant le terminal à effectuer la synchronisation au niveau sous-trame du lien supplémentaire OFDM HS-DPA, en vue d'un basculement du terminal du lien principal UMTS vers le lien supplémentaire OFDM HS-DPA. Optionnellement, cette notification comprend des informations relatives à la durée de l'intervalle de temps (Δt) et/ou à l'instant (t₀) déterminé sur le lien principal.

Par exemple, cette notification est transmise sur le canal de paging (canal PICH, pour « Paging Indicator CHannel ») compris dans le lien principal UMTS. On rappelle que le canal PICH appartient au système UMTS et est constitué de 300 bits (b0,..b299) transmis durant la période d'une trame de 10 ms. La longueur de la séquence d'étalement utilisée est de 256. Les derniers 12 bits (b288,..b299) ne sont pas utilisés dans la norme UMTS et sont donc libres. Afin de notifier le basculement vers le lien supplémentaire OFDM HS-DPA, ces 12 bits sont par exemple utilisés de la manière suivante :
- 4 bits pour la notification de basculement vers le lien supplémentaire (ces bits peuvent contenir des informations concernant la fréquence porteuse du canal supplémentaire) ;
- 4 bits pour indiquer l'instant t₀ : ceci donne 16 possibilités ce qui permet d'indiquer l'un quelconque des 15 slots UMTS dans une trame ;
- 4 bits pour indiquer l'intervalle de temps Δt.

## Revendications

1. Signal de radiotéléphonie cellulaire, du type comprenant :
- un canal principal (41) bidirectionnel symétrique, comprenant une voie montante principale et une voie descendante principale, assurant notamment la transmission à bas ou moyen débit de données et d'informations de signalisation et de contrôle ;
- au moins un canal supplémentaire (44) affecté au sens descendant uniquement, assurant notamment la transmission de données à haut débit, mettant en oeuvre une technique multiporteuse assurant une répartition des données dans l'espace temps/fréquence, et présentant une structure en sous-trames,
**caractérisé en ce que** le début d'au moins une sous-trame (45) du canal supplémentaire (44) est décalé d'un intervalle de temps de durée déterminée non nulle (Δt) par rapport à un instant (t₀) déterminé sur le canal principal (41) de façon à permettre, dans un terminal, une synchronisation au niveau sous-trame du canal supplémentaire (44) par détection dudit instant déterminé (t₀) et ajout dudit intervalle de temps (Δt),

2. Signal de radiotéléphonie cellulaire selon la revendication 1, le canal principal (41) présentant une structure organisée en trames, **caractérisé en ce que** l'instant (t₀) déterminé sur le canal principal est un début d'une trame (42) du canal principal (41).

3. Signal de radiotéléphonie cellulaire selon la revendication 2, **caractérisé en ce que** le début de chaque trame (42) du canal principal (41) constitue un instant (t₀) déterminé.

4. Signal de radiotéléphonie cellulaire selon la revendication 2, **caractérisé en ce que** le début de seulement certaine(s) trame(s) du canal principal (41) dites trames de synchronisation, constitue un instant (t₀) déterminé.

5. Signal de radiotéléphonie cellulaire selon la revendication 4, **caractérisé en ce que** le canal principal (41) et/ou le canal supplémentaire (44) assure(nt) la transmission d'informations d'identification d'au moins une trame de synchronisation.

6. Signal de radiotéléphonie cellulaire selon la revendication 1, le canal principal (41) présentant une structure organisée en trames comprenant chacune une pluralité de slots, **caractérisé en ce que** l'instant (t₀) déterminé sur le canal principal est un début d'un slot du canal principal.

7. Signal de radiotéléphonie cellulaire selon la revendication 6, **caractérisé en ce que** le début de seulement certain(s) slot(s) du canal principal (41) dits slots de synchronisation, constitue un instant (t₀) détermine.

8. Signal de radiotéléphonie cellulaire selon la revendication 7, **caractérisé en ce que** le canal principal et/ou le canal supplémentaire (44) assure(nt) la transmission d'informations d'identification d'au moins un slot de synchronisation.

9. Signal de radiotéléphonie cellulaire selon l'une quelconque des revendications 1 à 8, le canal principal (41) présentant une structure organisée en trames comprenant chacune une pluralité de slots, chaque slot comprenant une pluralité d'unités de signal (chips), **caractérisé en ce que** la durée déterminée dudit intervalle de temps (Δt) est égale à k fois la durée d'une unité de signal, avec k un nombre entier.

10. Signal de radiotéléphonie cellulaire selon la revendication 9, **caractérisé en ce que** k est égal à 256.

11. Signal de radiotéléphonie cellulaire selon l'une quelconque des revendications 1 à 10, **caractérisé en ce que** le canal principal (41) et/ou le canal supplémentaire (44) assure(nt) la transmission d'informations relatives à ladite durée de l'intervalle de temps (Δt).

12. Signal de radiotéléphonie cellulaire selon l'une quelconque des revendications 1 à 11, **caractérisé en ce que** le canal principal (41) et/ou le canal supplémentaire (44) assure(nt) la transmission d'informations relatives au rang, au sein d'une trame (45) de la structure du canal supplémentaire (44), d'une sous-trame (45) dont le début peut être détecté, de façon à permettre une synchronisation au niveau trame du canal supplémentaire (41) en détectant le début de la trame suivante, en fonction de ladite synchronisation au niveau sous-trame et desdites informations relatives au rang de ladite sous-trame.

13. Signal de radiotéléphonie cellulaire selon la revendication 12, **caractérisé en ce que** le canal principal (41) et/ou le canal supplémentaire (44) assure(nt) en outre la transmission d'informations relatives au mode de transmission des sous-trames sur le canal supplémentaire (44) ladite synchronisation au niveau trame du canal supplémentaire (44) étant fonction en outre desdites informations relatives au mode de transmission.

14. Signal de radiotéléphonie cellulaire selon l'une quelconque des revendications 1 à 13, **caractérisé en ce que** le canal principal (41) met en oeuvre une technique d'accès à étalement de spectre (CDMA), et est préférentiellement un lien UMTS.

15. Signal de radiotéléphonie cellulaire selon l'une quelconque des revendications 1 à 14, **caractérisé en ce que** ledit canal supplémentaire (44) met en oeuvre une technique multiporteuse basée sur une modulation OFDM ou une modulation IOTA.

16. Signal de radiotéléphonie cellulaire selon l'une quelconque des revendications 1 à 15, **caractérisé en ce que** le canal principal (41) assure au préalable la transmission d'une notification invitant ledit terminal à effectuer ladite synchronisation au niveau sous-trame du canal supplémentaire, en vue d'un basculement du terminal du canal principal vers le canal supplémentaire.

17. Signal de radiotéléphonie cellulaire selon la revendication 16, **caractérisé en ce** ladite notification comprend des informations relatives à ladite durée de l'intervalle de temps (Δt) et/ou audit instant (t₀) déterminé sur le canal principal (41).

18. Signal de radiotéléphonie cellulaire selon l'une quelconque des revendications 16 et 17, **caractérisé en ce** ladite notification est transmise sur un canal de paging compris dans ledit canal principal (41).

19. Procédé de synchronisation d'un canal supplémentaire (44) associé à un canal principal (41) bidirectionnel symétrique,
ledit canal principal (41) bidirectionnel symétrique comprenant une voie montante principale et une voie descendante principale, assurant notamment la transmission à bas ou moyen débit de données et d'informations de signalisation et de contrôle,
ledit canal supplémentaire (44) étant affecté au sens descendant uniquement, assurant notamment la transmission de données à haut débit, mettant en oeuvre une technique multiporteuse assurant une répartition des données dans l'espace temps/fréquence, et présentant une structure en sous-trames,
**caractérisé en ce qu'**il comprend une étape de synchronisation du canal supplémentaire (44) au niveau sous-trame, comprenant elle-même les étapes suivantes :
- détection d'un instant (t₀) déterminé sur le canal principal (41) ;
- obtention du début d'une sous-trame (45) du canal supplémentaire (44) en décalant l'instant (t₀) détecté d'un intervalle de temps de durée déterminée non nulle (Δt).

20. Procédé selon la revendication 19, **caractérisé en ce que** ladite durée de l'intervalle de temps (Δt) et/ou ledit instant (t₀) déterminé sur le canal principal (41) est (sont) figé(s) et connus dudit terminal.

21. Procédé selon la revendication 19, **caractérisé en ce que** ladite durée de l'intervalle de temps (Δt) et/ou ledit instant (t₀) déterminé sur le canal principal (41) est (sont) variable(s), et **en ce que** le canal principal (41) et/ou le canal supplémentaire (44) assure(nt) la transmission d'informations relatives à ladite durée de l'intervalle de temps (Δt) et/ou audit instant (t₀).

22. Procédé selon l'une quelconque des revendications 19 à 21, **caractérisé en ce qu'**il comprend en outre une étape préalable de transmission par le canal principal (41) d'une notification invitant ledit terminal à effectuer ladite synchronisation au niveau sous-trame du canal supplémentair (44) en vue d'un basculement du terminal du canal principal vers le canal supplémentaire (44).

23. Terminal d'un système de radiotéléphonie cellulaire, du type comprenant des moyens d'émission d'une voie montante principale, des moyens de réception d'une voie descendante principale et des moyens de réception d'au moins un canal supplémentaire (44),
ladite voie montante principale et ladite voie descendante principale formant un canal principal (41) bidirectionnel symétrique assurant notamment la transmission à bas ou moyen débit de données et d'informations de signalisation et de contrôle,
ledit canal supplémentaire (44) étant affecté au sens descendant uniquement, assurant notamment la transmission de données à haut débit, mettant en oeuvre une technique multiporteuse assurant une répartition des données dans l'espace temps/fréquence, et présentant une structure en sous-trames,
**caractérisé en ce qu'**il comprend des moyens de synchronisation du canal supplémentaire au niveau sous-trame, comprenant eux-mêmes :
- des moyens de détection d'un instant (t₀) déterminé sur le canal principal (41);
- des moyens d'obtention du début d'une sous-trame (45) du canal supplémentair (44), en décalant l'instant (t₀) détecté d'un intervalle de temps de durée déterminée non nulle (Δt).

24. Station de base d'un système de radiotéléphonie cellulaire, du type comprenant des moyens de réception d'une voie montante principale, des moyens d'émission d'une voie descendante principale et des moyens d'émisson d'au moins un canal supplémentaire (44)
ladite voie montante principale et ladite voie descendante principale formant un canal principal (41) bidirectionnel symétrique assurant notamment la transmission à bas ou moyen débit de données et d'informations de signalisation et de contrôle,
ledit canal supplémentaire (44) pétant affecté au sens descendant uniquement, assurant notamment la transmission de données à haut débit, mettant en oeuvre une technique multiporteuse assurant une répartition des données dans l'espace temps/fréquence, et présentant une structure en sous-trames,
**caractérisé en ce qu'**elle comprend des moyens de décalage du début d'au moins une sous-tram (45) du canal supplémentaire (44) d'un intervalle de temps de durée déterminée non nulle (Δt) par rapport à un instant (t₀) déterminé sur le canal principal (41), de façon à permettre, dans un terminal, une synchronisation au niveau sous-trame du canal supplémentaire (44), par détection dudit instant déterminé (t₀) et ajout dudit intervalle de temps (Δt).

## Claims

1. Cellular radiotelephony signal of the type including:
- a two-directional symmetric principal channel (41) including a principal uplink channel and a principal downlink channel, particularly for low or medium speed transmission of data and signalling and control information;
- at least one supplementary channel (44) assigned to the downlink only, particularly for transmission of data at high speed, making use of a multicarrier technique for distribution of data in the time/frequency space, and with a sub-frame type structure,
**characterised in that** the beginning of at least one sub-frame (45) of the supplementary channel (44) is offset by a time interval with a determined duration not equal to zero (Δt) with respect to a determined time (t₀) on the principal channel (41), so as to enable synchronisation of the supplementary channel (44) at sub-frame level in a terminal, by detection of said determined time (t₀) and by adding said time interval (Δt).

2. Cellular radiotelephony signal according to claim 1, the structure of the principal channel (41) being organised in frames, **characterised in that** the determined time (t₀) on the principal channel is a beginning of a frame (42) of the principal channel (41).

3. Cellular radiotelephony signal according to claim 2, **characterised in that** the beginning of each frame (42) of the principal channel (41) forms a determined time (t₀).

4. Cellular radiotelephony signal according to claim 2, **characterised in that** the beginning of only some frame(s) of the principal channel (41), called the synchronisation frames, forms a determined time (t₀).

5. Cellular radiotelephony signal according to claim 4, **characterised in that** the principal channel (41) and/or the supplementary channel (44) transmit(s) identification information of at least one synchronisation frame.

6. Cellular radiotelephony signal according to claim 1, the principal channel (41) having a structure organised in frames each including a plurality of slots, **characterised in that** the determined time (t₀) on the principal channel is a beginning of a slot of the principal channel.

7. Cellular radiotelephony signal according to claim 6, **characterised in that** the beginning of only some slot(s) of the principal channel (41), called the synchronisation slots, forms a determined time (t₀).

8. Cellular radiotelephony signal according to claim 7, **characterised in that** the principal channel (41) and/or the supplementary channel (44) transmit(s) identification information of at least one synchronisation slot.

9. Cellular radiotelephony signal according to any one of claims 1 to 8, the principal channel (41) having a structure organised in frames each comprising a plurality of slots, each slot comprising a plurality of signal units (chips), **characterised in that** the determined duration of said time interval (Δt) is equal to k times the duration of a signal unit, where k is an integer number.

10. Cellular radiotelephony signal according to claim 9, **characterised in that** k is equal to 256.

11. Cellular radiotelephony signal according to any one of claims 1 to 10, **characterised in that** the principal channel (41) and/or the supplementary channel (44) transmit(s) information about said duration of the time interval (Δt).

12. Cellular radiotelephony signal according to any one of claims 1 to 11, **characterised in that** the principal channel (41) and/or the supplementary channel (44) transmit(s) information about the rank within a frame of the structure of the supplementary channel (44), of a sub-frame (45) for which the beginning may be detected, so as to enable synchronisation (44) at frame level of the supplementary channel by detecting the beginning of the next frame as a function of said synchronisation at sub-frame level and of said information about the rank of said sub-frame.

13. Cellular radiotelephony signal according to claim 12, **characterised in that** the principal channel (41) and/or the supplementary channel (44) also transmit(s) information about the mode of transmitting sub-frames on the supplementary channel (44), said synchronisation at frame level of the supplementary channel (44) also depending on said information about the transmission mode.

14. Cellular radiotelephony signal according to any one of claim 1 to 13, **characterised in that** the principal channel (41) implements a spectrum spreading access (CDMA) technique and is preferably a UMTS link.

15. Cellular radiotelephony signal according to any one of claim 1 to 14, **characterised in that** said supplementary channel (44) implements a multicarrier technique based on an OFDM modulation or an IOTA modulation.

16. Cellular radiotelephony signal according to any one of claims 1 to 15, **characterised in that** the principal channel (41) firstly transmits a notification prompting said terminal to perform said synchronisation at sub-frame level of the supplementary channel, to swap the terminal from the principal channel to the supplementary channel.

17. Cellular radiotelephony signal according to claim 16, **characterised in that** said notification comprises information about said duration of the time interval (Δt) and/or said determined time (t₀) on the principal channel (41).

18. Cellular radiotelephony signal according to either of claims 16 and 17, **characterised in that** said notification is transmitted to a paging channel included in said principal channel (41).

19. Synchronisation process for a supplementary channel (44) associated with a symmetric two-directional principal channel (41),
said symmetric two-directional principal channel (41) comprising a principal uplink channel and a principal downlink channel, particularly for low or medium speed transmission of signalling and control data and information;
said supplementary channel (44) being assigned to the downlink only, particularly for transmission of data at high speed, making use of a multicarrier technique for distribution of data in the time/frequency space, and with a sub-frame type structure,
**characterised in that** it comprises a step for synchronisation of the supplementary channel (44) at sub-frame level, itself including the following steps:
- detect a determined time (t₀) on the principal channel (41);
- obtain the beginning of a sub-frame (45) of the supplementary channel (44), by offsetting the detected time (t₀) by a time interval with a determined duration not equal to zero (Δt).

20. Process according to claim 19, **characterised in that** said duration of the time interval (Δt) and/or said determined time (t₀) on the principal channel (41) is (are) fixed and known to said terminal.

21. Process according to claim 19, **characterised in that** said duration of the time interval (Δt) and/or said determined time (t₀) on the principal channel (41) is (are) variable, and the principal channel (41) and/or the supplementary channel (44) transmit(s) information about said duration of the time interval (Δt) and/or said time (t₀).

22. Process according to any one of claims 19 to 21, **characterised in that** it includes a preliminary step in which a notification is transmitted through the principal channel (41) prompting said terminal to do said synchronisation at sub-frame level of the supplementary channel (44), so as to swap the terminal from the principal channel to the supplementary channel (44).

23. Terminal of a cellular radiotelephony system, of the type including means of transmitting a principal uplink channel, means of receiving a principal downlink channel, and means of receiving at least one supplementary channel (44),
said principal uplink and said principal downlink forming a symmetric two-directional principal channel (41) particularly for low or medium speed transmission of signalling and control data and information,
said supplementary channel (44) being assigned to the downlink only, particularly for transmission of data at high speed, making use of a multicarrier technique for distribution of data in the time/frequency space, and with a sub-frame type structure,
**characterised in that** it comprises means of synchronisation of the supplementary channel at sub-frame level, themselves including:
- means of detecting a determined time (t₀) on the principal channel (41);
- means of obtaining the beginning of a sub-frame (45) of the supplementary channel (44), by offsetting the detected time (t₀) by a time interval with a determined duration not equal to zero (Δt).

24. Base station of a cellular radiotelephony system, of the type including means of receiving a principal uplink channel, means of transmitting a principal downlink channel, and means of transmitting at least one supplementary channel (44),
said principal uplink channel and said principal downlink channel forming a symmetric two-directional principal channel (41) particularly for low or medium speed transmission of signalling and control data and information,
said supplementary channel (44) being assigned to the downlink only, particularly for transmission of data at high speed, making use of a multicarrier technique for distribution of data in the time/frequency space, and with a sub-frame type structure,
**characterised in that** it comprises means of offsetting the beginning of at least one sub-frame (45) of the supplementary channel (44), by a time interval with a determined duration not equal to zero (Δt) from a determined time (t₀) on the principal channel (41), so as to enable synchronisation of the supplementary channel (44) at sub-frame level, in a terminal, by detection of said determined time (to), and adding said time interval (Δt).

## Patentansprüche

1. Zellulares Funktelefonsignal vom Typ aufweisend:
- einen bidirektionalen symmetrischen Hauptkanal (41), der einen Haupt-Uplink und einen Haupt-Downlink aufweist, die insbesondere die Übertragung bei niedrigem oder mittlerem Daten- und Signalisierungsinformations- und Steuerungsdurchsatz sicherstellen;
- mindestens einen nur für die Downstream-Richtung vorgesehenen Zusatzkanal (44), der insbesondere die Datenübertragung bei hohem Durchsatz sicherstellt, wobei eine Mehrträger-Technik angewendet wird, die eine Aufteilung der Daten im Zeit/Frequenz-Raum sicherstellt, und der eine Struktur mit Unter-Datenrahmen aufweist,
**dadurch gekennzeichnet, dass** der Anfang von mindestens einem Unter-Datenrahmen (45) des Zusatzkanals (44) um ein Zeitintervall bestimmter Dauer ungleich Null (Δt) im Verhältnis zu einem bestimmten Zeitpunkt (t₀) auf dem Hauptkanal (41) verschoben ist, um auf einem Endgerät eine Synchronisation auf der Stufe der Unter-Datenrahmen des Zusatzkanals (44) durch Feststellen des bestimmten Zeitpunkts (t₀) und durch Hinzufügen des Zeitintervalls (Δt) zu ermöglichen.

2. Zellulares Funktelefonsignal nach Anspruch 1, wobei der Hauptkanal (41) eine in Datenrahmen organisierte Struktur aufweist, **dadurch gekennzeichnet, dass** der bestimmte Zeitpunkt (t₀) auf dem Hauptkanal ein Anfang von einem Datenrahmen (42) des Hauptkanals (41) ist.

3. Zellulares Funktelefonsignal nach Anspruch 2, **dadurch gekennzeichnet, dass** der Anfang von jedem Datenrahmen (42) des Hauptkanals (41) einen bestimmten Zeitpunkt (t₀) darstellt.

4. Zellulares Funktelefonsignal nach Anspruch 2, **dadurch gekennzeichnet, dass** der Anfang von nur einem bestimmten Datenrahmen oder von einigen bestimmten Datenrahmen des Hauptkanals (41), nämlich Synchronisationsdatenrahmen, einen bestimmten Zeitpunkt (t₀) darstellt/darstellen.

5. Zellulares Funktelefonsignal nach Anspruch 4, **dadurch gekennzeichnet, dass** der Hauptkanal (41) und/oder der Zusatzkanal (44) die Übertragung von Identifikationsinformationen des mindestens einen Synchronisationsdatenrahmens sicherstellt/sicherstellen.

6. Zellulares Funktelefonsignal nach Anspruch 1, wobei der Hauptkanal (41) eine in Datenrahmen organisierte Struktur aufweist, von denen jeder eine Vielzahl von Slots aufweist, **dadurch gekennzeichnet, dass** der bestimmte Zeitpunkt (t₀) auf dem Hauptkanal ein Anfang von einem Slot des Hauptkanals ist.

7. Zellulares Funktelefonsignal nach Anspruch 6, **dadurch gekennzeichnet, dass** der Anfang von nur einem bestimmten Slot oder von einigen bestimmten Slots des Hauptkanals (41), nämlich Synchronisationsslots, einen bestimmten Zeitpunkt (t₀) darstellt/darstellen.

8. Zellulares Funktelefonsignal nach Anspruch 7, **dadurch gekennzeichnet, dass** der Hauptkanal (41) und/oder der Zusatzkanal (44) die Übertragung von Identifikationsinformationen des mindestens einen Synchronisationsslots sicherstellt/sicherstellen.

9. Zellulares Funktelefonsignal nach mindestens einem der Ansprüche 1 bis 8, wobei der Hauptkanal (41) eine in Datenrahmen organisierte Struktur aufweist, von denen jeder eine Vielzahl von Slots aufweist, wobei jeder Slot eine Vielzahl von Signaleinheiten (Chips) aufweist, **dadurch gekennzeichnet, dass** die bestimmte Dauer des Zeitintervalls (ort) gleich k mal der Dauer einer Signaleinheit ist mit k als ganzer Zahl.

10. Zellulares Funktelefonsignal nach Anspruch 9, **dadurch gekennzeichnet, dass** k gleich 256 ist.

11. Zellulares Funktelefonsignal nach mindestens einem der Ansprüche 1 bis 10, **dadurch gekennzeichnet, dass** der Hauptkanal (41) und/oder der Zusatzkanal (44) die Übertragung von Informationen zu der Dauer des Zeitintervalls (Δt) sicherstellt/sicherstellen.

12. Zellulares Funktelefonsignal nach mindestens einem der Ansprüche 1 bis 11, **dadurch gekennzeichnet, dass** der Hauptkanal (41) und/oder der Zusatzkanal (44) die Übertragung von Informationen zum Rang innerhalb eines Datenrahmens der Struktur des Zusatzkanals (44), innerhalb eines Unter-Datenrahmens (45), dessen Anfang festgestellt werden kann, sicherstellt/sicherstellen, um eine Synchronisation auf der Stufe der Datenrahmen des Zusatzkanals (44) durch Feststellen des Anfangs des Folge-Datenrahmens zu ermöglichen, in Abhängigkeit von der Synchronisation auf der Stufe der Unter-Datenrahmen und der Informationen zum Rang des Unter-Datenrahmens.

13. Zellulares Funktelefonsignal nach Anspruch 12, **dadurch gekennzeichnet, dass** der Hauptkanal (41) und/oder der Zusatzkanal (44) unter anderem die Übertragung von Informationen zu dem Übertragungsmodus der Unter-Datenrahmen auf dem Zusatzkanal (44) sicherstellt/sicherstellen, wobei die Synchronisation auf der Stufe der Datenrahmen des Zusatzkanals (44) unter anderem von den Informationen zu dem Übertragungsmodus abhängig sind.

14. Zellulares Funktelefonsignal nach mindestens einem der Ansprüche 1 bis 13, **dadurch gekennzeichnet, dass** der Hauptkanal (41) eine Zugriffstechnik mit Frequenzspreizung (CDMA) anwendet und bevorzugterweise eine UMTS-Verbindung ist.

15. Zellulares Funktelefonsignal nach mindestens einem der Ansprüche 1 bis 14, **dadurch gekennzeichnet, dass** der Zusatzkanal (44) eine Multicarrier-Technik basierend auf einer OFDM-Modulation oder auf einer IOTA-Modulation anwendet.

16. Zellulares Funktelefonsignal nach mindestens einem der Ansprüche 1 bis 15, **dadurch gekennzeichnet, dass** der Hauptkanal (41) im Voraus die Übertragung einer Benachrichtigung sicherstellt, die das Endgerät zum Ausführen der Synchronisation auf der Stufe der Unter-Datenrahmen des Zusatzkanals in Hinblick auf ein Umschalten des Endgeräts von dem Hauptkanal auf dem Zusatzkanal auffordert.

17. Zellulares Funktelefonsignal nach Anspruch 16, **gekennzeichnet durch** die Benachrichtigung, die Informationen zu der Dauer des Zeitintervalls (ort) und/oder zu dem bestimmten Zeitpunkt (t₀) auf dem Hauptkanal (41) aufweist.

18. Zellulares Funktelefonsignal nach mindestens einem der Ansprüche 16 und 17, **gekennzeichnet durch** die Benachrichtigung, die auf einem Paging-Kanal übertragen wird, der in dem Hauptkanal (41) enthalten ist.

19. Synchronisationsverfahren eines mit einem bidirektionalen symmetrischen Hauptkanal (41) verknüpften Zusatzkanals (44),
wobei der bidirektionale symmetrische Hauptkanal (41) einen Haupt-Uplink und einen Haupt-Downlink aufweist, die insbesondere die Übertragung bei niedrigem oder mittlerem Daten- und Signalisierungsinformations- und Steuerungsdurchsatz sicherstellen,
wobei der Zusatzkanal (44) nur für die Downstream-Richtung vorgesehen ist und insbesondere die Datenübertragung bei hohem Durchsatz sicherstellt, wobei eine Mehrträger-Technik angewendet wird, die eine Aufteilung der Daten im Zeit/Frequenz-Raum sicherstellt, und der eine Struktur mit Unter-Datenrahmen aufweist,
**dadurch gekennzeichnet, dass** das Verfahren einen Synchronisationsschritt des Zusatzkanals (44) auf der Stufe der Unter-Datenrahmen aufweist, wobei derselbe die folgenden Schritte aufweist:
- Feststellen eines bestimmten Zeitpunktes (t₀) auf dem Hauptkanal (41);
- Ermitteln des Anfangs eines Unter-Datenrahmens (45) des Zusatzkanals (44) mittels Verschieben des festgestellten Zeitpunktes (t₀) um ein Zeitintervall bestimmter Dauer ungleich Null (Δt).

20. Verfahren nach Anspruch 19, **dadurch gekennzeichnet, dass** die Dauer des Zeitintervalls (Δt) und/oder der bestimmte Zeitpunkt (t₀) auf dem Hauptkanal (41) festgesetzt und dem Endgerät bekannt ist/sind.

21. Verfahren nach Anspruch 19, **dadurch gekennzeichnet, dass** die Dauer des Zeitintervalls (Δt) und/oder der bestimmte Zeitpunkt (t₀) auf dem Hauptkanal (41) eine Variable ist/Variablen sind, und dass der Hauptkanal (41) und/oder der Zusatzkanal (44) die Übertragung von Informationen zu der Dauer des Zeitintervalls (Δt) und/oder dem Zeitpunkt (t₀) sicherstellt/sicherstellen.

22. Verfahren nach mindestens einem der Ansprüche 19 bis 21, **dadurch gekennzeichnet, dass** das Verfahren unter anderem einen Schritt vor der Übertragung einer Benachrichtigung über den Hauptkanal (41) aufweist, die das Endgerät zum Ausführen der Synchronisation auf der Stufe der Unter-Datenrahmen des Zusatzkanals (44) im Hinblick auf ein Umschalten des Endgeräts von dem Hauptkanal (41) auf dem Zusatzkanal (44) auffordert.

23. Endgerät eines zellularen Funktelefonsystems, vom Typ aufweisend Mittel zum Senden eines Haupt-Uplinks, Mittel zum Empfangen eines Haupt-Downlinks und Mittel zum Empfangen mindestens eines Zusatzkanals (44),
wobei der Haupt-Uplink und der Haupt-Downlink einen bidirektionalen symmetrischen Hauptkanal (41) bilden und insbesondere die Übertragung bei niedrigem oder mittlerem Daten- und Signalisierungsinformations- und Steuerungsdurchsatz sicherstellen,
wobei der Zusatzkanal (44) nur für die Downstream-Richtung vorgesehen ist und insbesondere die Datenübertragung bei hohem Durchsatz sicherstellt, wobei eine Mehrträger-Technik angewendet wird, die eine Aufteilung der Daten im Zeit/Frequenz-Raum sicherstellt, und der eine Struktur mit Unter-Datenrahmen aufweist,
**dadurch gekennzeichnet, dass** es Mittel zum Synchronisieren des Zusatzkanals auf der Stufe der Unter-Datenrahmen aufweist, wobei dieselben aufweisen:
- Mittel zum Feststellen eines bestimmten Zeitpunktes (t₀) auf dem Hauptkanal (41);
- Mittel zum Ermitteln des Anfangs eines Unter-Datenrahmens (45) des Zusatzkanals (44) mittels Verschieben des festgestellten Zeitpunktes (t₀) um ein Zeitintervall bestimmter Dauer ungleich Null (Δt).

24. Basisstation eines zellularen Funktelefonsystems, vom Typ aufweisend Mittel zum Empfangen eines Haupt-Uplinks, Mittel zum Senden eines Haupt-Downlinks und Mittel zum Senden mindestens eines Zusatzkanals (44),
wobei der Haupt-Uplink und der Haupt-Downlink einen bidirektionalen symmetrischen Hauptkanal (41) bilden, die insbesondere die Übertragung bei niedrigem oder mittlerem Daten- und Signalisierungsinformations- und Steuerungsdurchsatz sicherstellen,
wobei der Zusatzkanal (44) nur für die Downstream-Richtung vorgesehen ist und insbesondere die Datenübertragung bei hohem Durchsatz sicherstellt, wobei eine Mehrträger-Technik angewendet wird, die eine Aufteilung der Daten im Zeit/Frequenz-Raum sicherstellt, und der eine Struktur mit Unter-Datenrahmen aufweist,
**dadurch gekennzeichnet, dass** die Basisstation Mittel zum Verschieben des Anfangs von mindestens einem Unter-Datenrahmen (45) des Zusatzkanals (44) um ein Zeitintervall bestimmter Dauer ungleich Null (Δt) im Verhältnis zu einem bestimmtem Zeitpunkt (t₀) auf dem Hauptkanal (41) aufweist, um auf einem Endgerät eine Synchronisation auf der Stufe der Unter-Datenrahmen des Zusatzkanals (44) durch Feststellen des bestimmten Zeitpunkts (t₀) und durch Hinzufügen des Zeitintervalls (Δt) zu ermöglichen.
